# EUROPÄISCHE PATENTANMELDUNG

(11) **EP 0 692 701 A2**
(43) Veröffentlichungstag der Anmeldung: **17.01.1996**
(21) Anmeldenummer: 95109081.0
(22) Anmeldetag: 13.06.1995
(51) Int. Cl.: G01F 3/00

(54) **Vorrichtung zum Messen von Kraftstoffeinspritzmengen**

(30) Priorität: 13.07.1994 DE 4424641
(71) Anmelder: ROBERT BOSCH GMBH, D-70442 Stuttgart (DE)
(72) Erfinder: Grob, Ferdinand, Dipl.-Ing., D-74354 Besigheim (DE); Prochaska, Torsten, Dipl.-Ing., D-01809 Heidenau (DE)

(57) **Zusammenfassung**

Es wird eine Vorrichtung zum Messen von Kraftstoffeinspritzmengen vorgeschlagen, bei der mit Hilfe eines in der Einspritzleitung (22) angeordneten Trennkörpern (44) die Bewegung der Kraftstoffsäule zum Kraftstoffventil hin erfaßt wird und daraus die zum Einspritzventil geförderte Kraftstoffmenge gemessen wird. Dabei wird die Differenz zwischen einer Ausgangslage des Trennkörpers (44) und einer Endlage des Trennkörpers (44) nach abgeschlossener Voreinspritzung als Meßwert für die Einspritzmenge erfaßt. Für eine darauffolgende Haupteinspritzung gelangt der Trennkolben (44) in einem nicht mehr der Messung dienenden Überströmbereich, innerhalb dem er sich nicht mehr weiterbewegt aber einen Durchtrittsquerschnitt der Kraftstoffeinspritzleitung zum Kraftstoffeinspritzventil ungehindert freigibt. Nach Abschluß der Haupteinspritzung wird der Trennkörper unter Einwirkung der Kraft einer Druckfeder (36) wieder in seine Ausgangslage zurückgebracht. Die durch die Verschiebung des Trennkörpers (44) komprimierte Druckfeder und deren Spannkraft wird als Wegsignal über einen Kraftaufnehmer (33) erfaßt.

## Beschreibung

### Stand der Technik

Die Erfindung geht von einer Vorrichtung zum Messen von Kraftstoffeinspritzmengen nach der Gattung des Patentanspruchs 1 aus. Bei einer solchen durch die DE-A1-29 09 233 bekannten Vorrichtung ist zur Hochdruckerzeugung eine Hochdruckpumpe vorgesehen, die Kraftstoff in einen Speicher pumpt, von wo aus der Kraftstoff zu den einzelnen Einspritzdüsen geführt wird und von wo aus auch ein Steuer- und Betätigungsdruck entnommen wird mittels dem gesteuert durch Elektromagnetventile die Ventilnadel der Einspritzventile betätigt wird. In der Verbindung zwischen Speicher und dem Teil der Einspritzventile aus dem Kraftstoff in dem Brennraum einer Brennkraftmaschine eingespritzt wird, ist die gattungsgemäße Meßvorrichtung vorgesehen, die aus einem Trennkolben besteht, der die speicherseitige Hochdruckleitung von der einspritzventilseitigen Hochdruckleitung trennt und der bei einem Einspritzvorgang durch das Einspritzventil entsprechend der dorthin zugeführten Kraftstoffmenge innerhalb eines Zylinders verschoben wird. Dabei wird mit dieser Vorrichtung die einzuspritzende Kraftstoffmenge gesteuert, indem der Verschiebeweg des Trennkolbens induktiv erfaßt und einer Steuereinrichtung zugeführt wird, die den der Einspritzmenge repräsentativen Verschiebeweg des Trennkolbens mit einer Solleinspritzmenge vergleicht und bei Erreichen dieser Verschiebestellung das zuvor geöffnete Einspritzventil bei Beendigung der Einspritzung schließt. Der Trennkolben ist gegen eine Feder verschiebbar und wird von dieser in den Einspritzpausen in seine Ausgangsstellung zurückgeführt, wozu eine beide Seiten des Trennkolbens verbindende Drosselverbindung vorgesehen ist. Die Einspritzleitung zwischen Speicher und Ventilsitz des Einspritzventils ist dabei ständig einem konstanten hohen Druck ausgesetzt im Gegensatz zu intermittierend fördernden Kraftstoffeinspritzpumpen, bei denen das Einspritzende durch Entlastung der Einspritzleitung bzw. des Pumpenarbeitsraumes gesteuert wird. Würde die Meßvorrichtung in die Einspritzleitung bei einer solchen Kraftstoffeinspritzpumpe eingesetzt werden, so würde mit Beginn der Hochdruckförderung zunächst ein bestimmtes Volumen benötigt werden, das zur Druckerhöhung in der Einspritzleitung zwischen Einspritzpumpe und Einspritzventilsitz bis auf den Einspritzdruck notwendig wäre. Entsprechend diesem geförderten Volumen würde der Trennkolben bereits einen Weg zurücklegen, der dann das Meßergebnis über die tatsächlich eingespritzte Kraftstoffmenge verfälscht. Insbesondere wenn es darum geht, sehr kleine Einspritzmengen zu messen, wie z.B. bei einer Kraftstoffeinspritzung für Dieselmotoren mit Voreinspritzung, wäre eine solche Einrichtung nicht geeignet, genau die voreingespritzte Kraftstoffmenge zu erfassen.

### Vorteile der Erfindung

Die Vorrichtung zum Messen von Kraftstoffeinspritzmenge mit den kennzeichnenden Merkmalen des Patentanspruchs 1 hat demgegenüber den Vorteil, daß das Auffüllvolumen zur Erzeugung des hohen Einspritzdruckes in der Kraftstoffleitung zwischen Einspritzpumpe und Einspritzventil bei der Messung nicht erfaßt wird, so daß eine genaue Messung kleiner Einspritzmengen, insbesondere Voreinspritzmengen, möglich ist. Damit ergibt sich die Möglichkeit, die Voreinspritzung genau zu dosieren und damit die Möglichkeit, die Druckanstiegsgeschwindigkeit im Brennraum, insbesondere bei direkt einspritzenden Dieselmotoren, und die damit verbundene Geräuschentwicklung in abgestimmter Weise durch Steuerung der Kraftstoffmenge der Voreinspritzung zu senken. Mit Hilfe der erfindungsgemäßen Vorrichtung läßt sich im Regelkreis die einzuspritzende Voreinspritzmenge exakt steuern. Bei der weniger kritischen Haupteinspritzmenge läßt sich dann durch Zeitsteuerung die Einspritzmenge steuern.

Durch die erfindungsgemäße Weiterbildung gemäß Anspruch 2 wird in vorteilhafter Weise der Einfluß der Haupteinspritzmenge von der Vorrichtung zum Messen nicht erfaßt, wobei der Trennkolben dann zugleich als Ventil dienend den ungehinderten Durchfluß von Kraftstoffmenge für die Haupteinspritzung nach abgeschlossener Voreinspritzung erlaubt. Nach abgeschlosssener Voreinspritzung ist der Trennkörper demselben Druck ausgesetzt wie vor Beginn der Voreinspritzung, ist aber um den Volumenteil verschoben, der der eingespritzten Kraftstoffmenge bezogen auf den Ausgangsdruck vor Einspritzung entspricht. Damit erhält man ein sehr genaues Meßergebnis, das nicht durch die Höhe des Einspritzdruckes im Laufe der Druckanhebung bei der intermittierend fördernden Kraftstoffeinspritzpumpe abhängig ist. Gemäß der Ausgestaltung nach Patentanspruch 2 führt dabei der Trennkörper insgesamt einen minimal notwendigen Weg durch, der durch die Lage des Anschlags bestimmt ist. Die Rückführung des Trennkörpers nach erfolgter Haupteinspritzung erfolgt einerseits durch die Volumenvergrößerung des in der Einspritzleitung eingesperrten Kraftstoffs bei Druckentlastung im Pumpenarbeitsraum und zum anderen durch die rückführende Druckfeder, wobei die zweite Druckfeder zusammen mit der ersten Druckfeder die Ausgangslage vor einem neuen Einspritzvorgang festlegt. Für das schnelle Erreichen dieser Ausgangslage ist es vorteilhaft, daß ein zweiter Überströmbereich gemäß Patentanspruch 4 vorgesehen ist, innerhalb dem die Volumenänderung zwischen Vorrichtung zum Messen und dem Einspritzventil bei Entspannung sich ausgleichen kann, ohne daß der Trennkörper den ganzen, dieser Volumenänderung entsprechenden Weg zurücklegen müßte, da sein Weg durch den zweiten Anschlag begrenzt ist. Durch die Anschläge ergeben sich weiterhin gemäß Patentanspruch 5 die Vorteile, daß mit diesen und der die Stellung des Trennkörpers erfassenden elektrischen Einrichtung die Vorrichtung kalibriert werden kann. Die Anschläge liegen in einem definierten Abstand zueinander. Diese Tatsache kann insbesondere vorteilhaft dann verwendet werden, wenn die Wegmessung, des Verschiebeweges des Trennkörpers über eine Kraftmessung z.B. am Abstützpunkt der Feder erfaßt wird. Bei der Kalibrierung wird die Kraft erfaßt, die beim Auftreffen auf dem Anschlag vorliegt. Somit lassen sich alle Fertigungstoleranzen insbesondere der Feder mit der Kennlinie der Feder oder deren Ermüdung während des Betriebs ausschalten, wenn regelmäßig die Kalibrierung durchgeführt wird. Dies ist vorteilhaft während des Betriebs der Brennkraftmaschine möglich. In vorteilhafter Weise kann aber auch die Vorrichtung zur Erfassung des Einspritzbeginns verwendet werden, wenn die Vorrichtung ausreichend dicht an dem Einspritzventil angeordnet ist. Damit werden Fehler bei der Spritzbeginnerfassung minimiert, die dadurch entstehen, daß vor Beginn der Einspritzung zunächst das Kraftstoffvolumen zwischen Vorrichtung und Einspritzdüse auf den hohen Einspritzdruck vorgespannt werden muß. In Weiterbildung gemäß Anspruch 5 ist es bei ausreichender Dimensionierung des Verschiebespiels des Trennkörpers möglich, die Vorrichtung nur mit einer einzigen Feder zu betreiben und die Ausgangsstellung als Anlage an dem zweiten Anschlag zu definieren. Über das Verschiebespiel erfolgt bei Rückführung des Trennkörpers ein Kraftstofffluß zum Druckausgleich. Diese Ausgestaltung hat den Vorteil, daß die von dem Trennkörper zurückgelegten Wege verringert werden und damit die Vorrichtung genauere Meßergebnisse bietet. In besonders vorteilhafter Weise läßt sich der zwischen Voreinspritzung und Haupteinspritzung sich einstellende Druck auf einen konstanten Wert steuern mit Hilfe eines Druckhalteventils gemäß Patentanspruch 12. Zugleich läßt sich in vorteilhafter Weise der verbleibende Druck zwischen dem Voreinspritzvorgang und dem Haupteinspritzvorgang auf einem relativ hohen Niveau halten, so daß nur geringe Mengen bis zu Erreichen des Einspritzdruckes von der Kraftstoffeinspritzpumpe vorgefördert werden müssen.

### Zeichnung

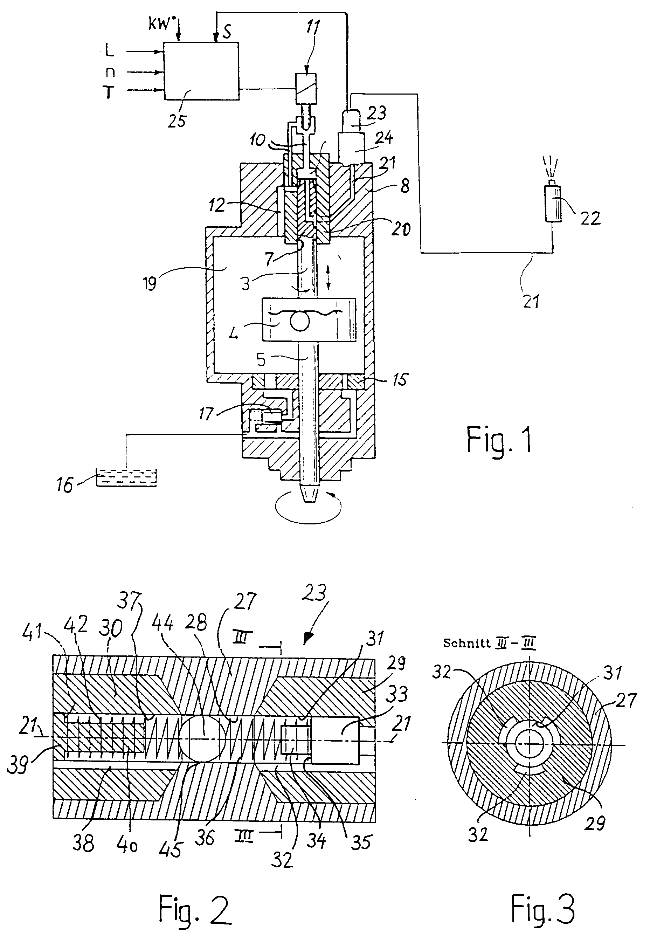

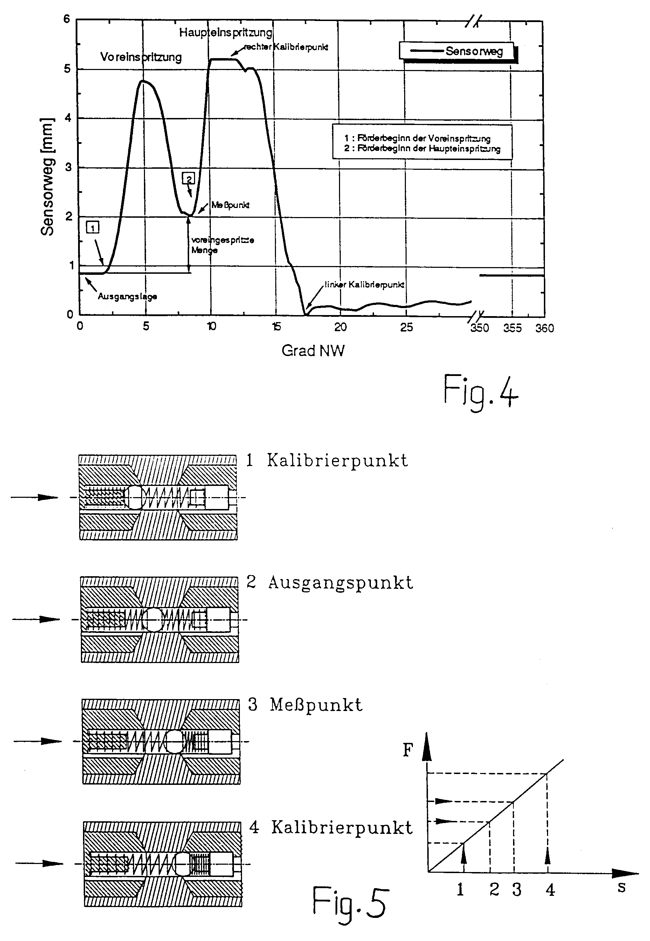

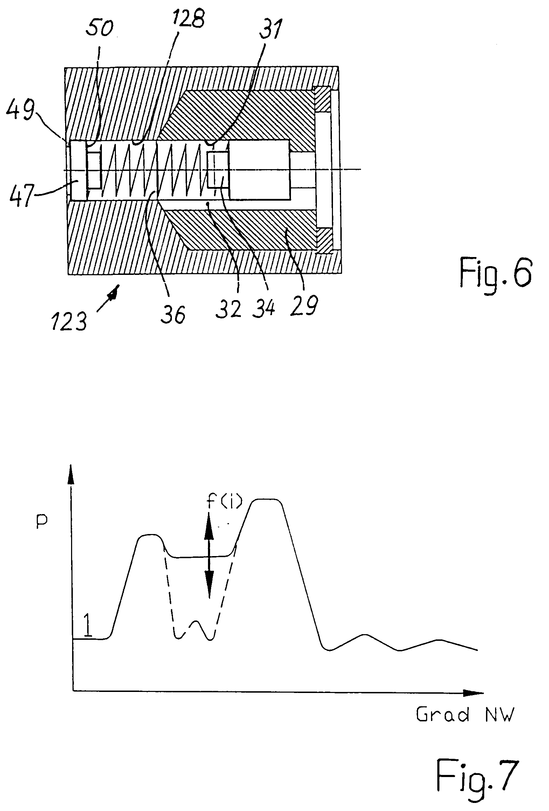

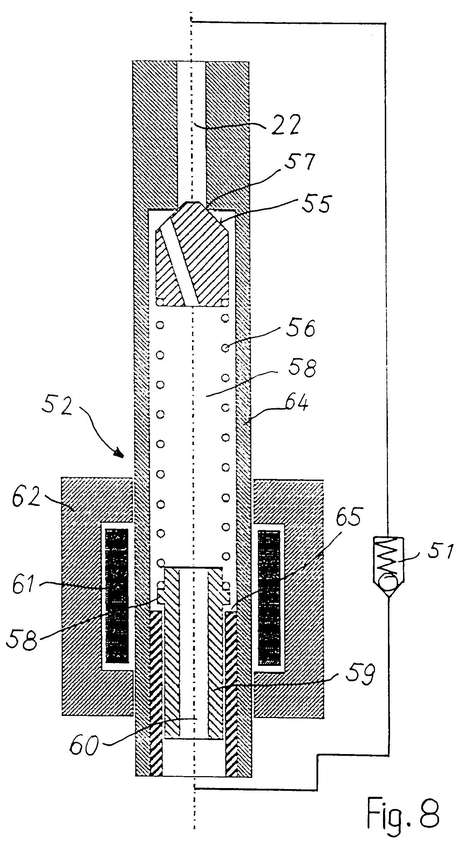

In der Zeichnung sind drei Ausführungsbeispiele der Erfindung dargestellt, die in der nachfolgenden Beschreibung näher erläutert werden. Es zeigen Figur 1 eine Kraftstoffeinspritzpumpe, bei der die erfindungsgemäße Vorrichtung zum Messen von Kraftstoffeinspritzmengen Anwendung findet, Figur 2 ein erstes Ausführungsbeispiel der Vorrichtung im Längsschnitt, Figur 3 einen Schnitt quer durch die Vorrichtung gemäß Figur 2 entlang der Linie III-III, Figur 4 den Wegverlauf des Trennkörpers gemäß dem Ausführungsbeispiel nach Figur 2, Figur 5 die verschiedenen Stellungen des Trennkörpers beim Ausführungsbeispiel nach Figur 2, Figur 6 ein zweites Ausführungsbeispiel der Vorrichtung zum Messen von Kraftstoffeinspritzmengen, Figur 7 den Druckverlauf in der Einspritzleitung in Abhängigkeit vom Drehwinkel der Kraftstoffeinspritzpumpe und Figur 8 ein drittes Ausführungsbeispiel der Erfindung mit einem in der Kraftstoffleitung angeordnetem elektrisch steuerbaren Druckhalteventil.

### Beschreibung

Moderne Brennkraftmaschinen, die nach dem Dieselbrennverfahren arbeiten, insbesondere mit Direkteinspritzung von Kraftstoff in den Hauptbrennraum weisen ein verbessertes Betriebsverhalten im Hinblick auf Geräuschbildung, Kraftstoffverbrauch und Emissionen auf, wenn sie mit einer in Voreinspritzung und Haupteinspritzung unterteilten Einspritzung in die Zylinder arbeiten. Die Druckanstiegsgeschwindigkeit ist insbesondere bei direkt einspritzenden Motoren reduziert. Dabei muß die Voreinspritzmenge zur weiteren Optimierung dem entsprechenden Betriebsbereich der Brennkraftmaschine angepaßt werden wie auch der Abstand der Voreinspritzung zur Haupteinspritzung. Solche Einspritzkonzepte können mit Pumpen erzielt werden, bei denen die Phasen der Hochdruckeinspritzung durch ein elektrisch gesteuertes Ventil gesteuert wird, das eine Entlastungsleitung des Pumpenarbeitsraum kontrolliert. In der Figur 1 ist anhand einer Verteilereinspritzpumpe ein solches Konzept dargestellt. Üblicherweise wird dabei ein Pumpenkolben 3 von einem Nockenatrieb 4, der wiederum von einer Antriebswelle 5 der Kraftstoffeinspritzpumpe betätigt wird, zu einer hin- und hergehenden und dabei rotierenden Bewegung angetrieben. Dies ist durch die in der Figur angezeigten Pfeile symbolisiert. Der Pumpenkolben bewegt sich innerhalb eines Pumpenzylinders 7 im Gehäuse 8 der Kraftstoffeinspritzpumpe und schließt in diesem Zylinder stirnseitig einen Pumpenarbeitsraum 9 ein. Dieser ist ständig mit einer Entlastungsleitung 10 verbunden, in der ein elektrisch gesteuertes Ventil, z. B. ein Magnetventil 11 angeordnet ist. Die Entlastungsleitung mündet über einen Saugkanal 12, der beim Saughub des Pumpenkolbens zur Versorgung des Pumpenarbeitsraums mit Kraftstoff dient, in einen Pumpensaugraum 14 innerhalb des Gehäuses 8 der Einspritzpumpe. In diesem Saugraum ragt ein Teil des Pumpenkolbens 3 und es ist dort auch der Nockenantrieb des Pumpenkolbens angeordnet. Der Saugraum wird über eine Förderpumpe 15 aus einem Kraftstoffbehälter 16 mit Kraftstoff versorgt. Die Förderpumpe wird synchron zur Drehzahl der Brennkraftmaschine von der Antriebswelle 5 angetrieben und fördert mit drehzahlabhängiger Menge. Dementsprechend stellt sich im Saugraum 14 ein drehzahlabhängiger Druck ein, der zusätzlich noch mit einem Drucksteuerventil 17 geregelt werden kann.

Am Pumpenarbeitsraum 9 führt ferner an der Stirnseite des Pumpenkolbens 3 ein axialer Kanal 19 zur Mantelfläche des Pumpenkolbens und einer dort befindlichen Verteileröffnung 20, die beim jeweiligen Förderhub des Pumpenkolbens entsprechend der Drehstellung des Pumpenkolbens nacheinander eine von mehreren Kraftstoffeinspritzleitungen 21 ansteuert, die vom Pumpenzylinder 7 aus dem Pumpengehäuse 8 hinaus zu einem jeweiligen Kraftstoffeinspritzventil 22 führen. In dieser Einspritzleitung ist eine Vorrichtung 23 zum Messen von den Kraftstoffeinspritzmengen, die dem Kraftstoffeinspritzventil 22 zur Einspritzung aus dem Pumpenarbeitsraum 9 zugeführt werden, vorgesehen. Der Vorrichtung 23 vorgeschaltet ist ein Gleichdruckentlastungsventil 24, durch das ein gewünschter Restdruck in der Kraftstoffeinspritzleitung zwischen Einspritzventil 22 und Gleichdruckentlastungsventil eingehalten werden kann. Das elektrisch gesteuerte Ventil wird von einer Steuereinrichtung 25 gesteuert z.B. in Abhängigkeit von der Last L, der Drehzahl n und der Temperatur T und erhält ferner von einem nicht gezeigten Winkelgeber Stellungssignale des aktuellen Kurbelwellenwinkels KW° oder Nockenwellenwinkels NW°. Es enthält ferner den Auswerteteil des von der Vorrichtung 23 abgegebenen Meßsignals S zur Weitergabe an den Steuerteil der Steuereinrichtung zur Betätigung des elektrisch gesteuerten Ventils 11.

In der Figur 2 ist die in Figur 1 schematisch dargestellte Vorrichtung 23 im Längsschnitt gezeigt. Die Vorrichtung 23 zum Messen der Kraftstoffeinspritzmengen oder nachfolgend Mengensensor genannt, weist ein in die Einspritzleitung eingesetztes zylindrisches Zwischenstück 27 auf, das als Teil der Einspritzleitung einen koaxialen Meßkanal 28 mit kreiszylindrischem Querschnitt hat. Beidseitig anschließend an diesen Meßkanal sind stirnseitig in das Zwischenstück 27 ein erster Einsatz 29 und ein zweiter Einsatz 30 in eine jeweilige Sackbohrung des Zwischenstücks eingefügt. Der erste Einsatz 29, der einspritzventilseitig angeordnet ist, weist in Verlängerung des Meßkanals eine weiterführende Bohrung 31 auf, die in der Mantelfläche Längsnuten 32 aufweist, die mit gleichem Winkelabstand zueinander angeordnet und mit gleicher Querschnittsfläche versehen sind. Die Summe der Querschnittsflächen dieser Längsnuten entspricht wenigstens der Querschnittsfläche der weiterführenden Einspritzleitung 21. Die Bohrung 31 ist als gestufte Bohrung ausgeführt mit zum Meßkanal weisender Bohrung mit größerem Durchmesser, in die in einer beispielsweisen Ausführung ein Kraftaufnehmer 33 eingesetzt ist, der sich an der Stufe am Übergang der beiden Bohrungsteile einspritzventilseitig abstützt und der zum Meßkanal 28 hinweisend an seiner Stirnseite einen vorstehenden zylindrischen Zapfen 34 aufweist, der als erster Anschlag dient und eine Ringschulter 35 begrenzt, an die das Ende einer ersten Druckfeder 36 zur Anlage kommt. Der Kraftaufnehmer 33 wird von den Nuten 32, die durchgehend im ersten Einsatz vorgesehen sind, umgangen.

Der zweite Einsatz 30 ist dem ersten Einsatz 29 entsprechend gestaltet. Auch er weist eine Bohrung 37 auf mit gleichem Durchmesser wie der Durchmesser des Meßkanals 28. Diese Bohrung 37 ist als durchgehende Bohrung ausgestaltet und weist in der Mantelfläche ebenfalls Längsnuten 38 gleicher Auslegung auf wie die Längsnuten 32 beim ersten Einsatz 29. Am außenliegenden Ende der Bohrung 37 ist ein Stopfen 39 eingepreßt, von dessen zum Meßkanal 28 weisender Stirnseite ein zylindrischer Zapfen 40 als zweiter Anschlag vorsteht. Der Zapfen begrenzt an der Stirnseite des Stopfens 39 eine Ringschulter 41, an der das eine Ende einer zweiten Druckfeder 42 zur Anlage kommt. Zwischen der ersten Druckfeder 36 und der zweiten Druckfeder 42 ist ein Trennkörper 44 in Form einer Kugel eingespannt, deren Durchmesser einen definierten Leckspalt 45 zur zylindrischen Innenwand des Meßkanals 28 bildet. Bei Druckausgleich auf beiden Seiten der Kugel 44 nimmt diese eine in der Figur 2 gezeigte Ausgangsstellung ein, die sich am linken, pumpenarbeitsraumseitigen Ende des Meßkanals 25 befindet.

Die Position der Kugel innerhalb des Meßkanals 28 wird gemessen. Im ausgeführten Beispiel beispielsweise durch den Kraftaufnehmer 33, der z.B. ein Piezogeber sein kann. Die Lage der Kugel ist jedoch auch mit anderen Mitteln erfaßbar, die der Technik zur Verfügung stehen, z.B. durch eine optische kapazitive oder induktive Wegerfassung. Vorteilhaft ist dabei insbesondere eine berührungslose Messung.

Wird bei einem Förderhub des Pumpenkolbens 3 nun Kraftstoff unter Hochdruck zum Kraftstoffeinspritzventil über die Kraftstoffeinspritzleitung gefördert, so verdrängt der zufließende Kraftstoff die Kugel 44 entgegen der Kraft der ersten Druckfeder 36. Zugleich bewegt sich die Kraftstoffsäule, die auf Hochdruck gebracht wird, auf der Seite des Kraftstoffeinspritzventils der Kugel 44 zu dem Kraftstoffeinspritzventil hin, so daß dort eine Einspritzung erfolgen kann. Wie eingangs erwähnt, soll mit Hilfe des Mengensensors die Menge der Voreinspritzung gemessen werden. Dabei ist die Länge des Meßkanals 28 so ausgelegt, daß bei größter auftretender Kraftstoffvoreinspritzmenge die Kugel 44 innerhalb des Meßkanals 28 bleibt. Im Rahmen der Voreinspritzung wird bei Druckhubbeginn des Pumpenkolbens zunächst das Kraftstoffvolumen von Pumpenarbeitsraum und Einspritzleitung bis zum Kraftstoffeinspritzventil auf den Einspritzruck bzw. Einspritzventilöffnungsdruck vorgespannt. Dies entspricht einem bestimmten geförderten Volumen, einem Volumen, um das die Kugel 44 zunächst in Richtung Kraftstoffeinspritzventil verschoben wird. Ist der Einspritzdruck erreicht, so erfolgt die tatsächliche Einspritzung und die Kugel 44 wird weiter verschoben bis die Voreinspritzung beendet wird. Daraufhin erfolgt eine Entlastung des Druckes der Einspritzleitung durch das Öffnen des Magnetventils 11. Der Kraftstoff in der Einspritzleitung entspannt sich. Das führt im Bereich zwischen Kugel 44 und Einspritzventil zu einer Volumenvergrößerung, die die Kugel wieder um einen bestimmten Betrag zurückverschiebt. Die dann eingenommene Position der Kugel wird gemessen und dieser Wert mit der Ausgangsstellung der Kugel verglichen. Die Differenz entspricht der eingespritzten Kraftstoffmenge während des Voreinspritzvorgangs. Dabei ist diese Menge auf einen niedrigen Druck bezogen und somit auch sehr genau. Die Restdrücke im Betriebsbereich zwischen Voreinspritzung und Haupteinspritzung sind in der Regel höher als die Restdrücke zwischen Haupteinspritzung und der nachfolgenden Voreinspritzung. Diese Differenz wird von der elektrischen Auswerteeinrichtung für das Mengensensorsignal bei dem Meßergebnis als Korrekturwert berücksichtigt. Diese Werte sind im Sinne der Genauigkeit des Meßergebnisses auch sehr gut erfaßbar.

Nach erfolgter Voreinspritzung und der Pause erfolgt dann regelmäßig die Haupteinspritzung, bei der die Kugel aus der gegenüber der Ausgangsstellung verschobenen Lage wiederum in Richtung Einspritzventil verschoben wird und zwar über die Länge des Meßkanals hinaus in einen Überströmbereich, der durch die Bohrung 31 zusammen mit den Nuten 32 gebildet wird. Die Kugel wird dabei bis zur Anlage an den ersten Anschlag 34 verschoben, in eine Position, bei der die Verbindung zwischen Meßkanal 28 und den Längsnuten 32 geöffnet ist. Dieser Punkt wird als rechter Kalibrierpunkt bezeichnet. Der von der Kraftstoffeinspritzpumpe geförderte Kraftstoff kann dann an der Kugel 44 vorbei über diese Längsnuten zum Kraftstoffeinspritzventil strömen, an dem dann die Haupteinspritzmenge zur Einspritzung kommt.

Diese Zusammenhänge sind in dem Diagramm Figur 4 nochmals dargestellt, wobei die Ziffer 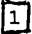 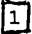 die Ausgangslage der Kugel im Meßkanal 28 angibt. Das entspricht dem Zustand nach einer vorhergegangenen Haupteinspritzung. Während der Voreinspritzung legt die Kugel dann einen Weg zurück bis zu einer Maximalverschiebung und läuft nach Unterbrechung der Voreinspritzung zurück zum mit 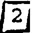 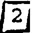 markierten Punkt. Diese Position wird gemessen und die Differenz gegenüber der Ausgangslage bestimmt. Dem Diagramm ist weiterhin zu entnehmen, daß in der nachfolgenden Haupteinspritzung die Kugel bis zur Anlage an dem ersten Anschlag 34, den rechten Kalibrierpunkt verschoben wird. Wird dann nach der Haupteinspritzung, die unter höherem Druck erfolgt als die Voreinspritzung, der Pumpenarbeitsraum über das Magnetventil 11 entlastet, so läuft die Kugel aufgrund der dabei erfolgenden Volumenvergrößerung bei Druckentspannung über ihre ursprüngliche Ausgangslage zurück in einen Überströmbereich innerhalb der Bohrung 37 und kommt dort entgegen der Kraft der zweiten Druckfeder 42 zur Anlage an den zweiten Anschlag 40. In dieser Position ist wiederum die Verbindung zwischen Meßkanal 28 und den Nuten 38 freigegeben, so daß der sich weiterhin entspannende Kraftstoff über diese Nuten zum Pumpenarbeitsraum und dort zur Entlastungsseite über das Magnetventil 11 zurückfließen kann. Im Anschluß daran nimmt die Kugel unter Herstellung eines Druckausgleiches zwischen den beiden Kraftstoffeinspritzleitungsteilen wiederum ihre Ausgangslage ein, die durch die Kräfte der beiden Druckfedern 36 und 42 bestimmt ist. Der dabei verdrängte Kraftstoff fließt über den Leckspalt 45. Die Anlage an den zweiten Anschlag 40 stellt den im Diagramm Figur 4 bezeichneten linken Kalibrierpunkt dar. In der Figur 5 sind diese verschiedenen Positionen der Kugel dargestellt. Mit Hilfe des linken und rechten Kalibrierpunktes, die bei jedem Arbeitsvorgang erreicht werden, können die dabei gemessenen Kräfte am Kraftaufnehmer ermittelt werden. Der zurückgelegte Weg zwischen den Kalibrierpunkten ist vorgegeben. Zusammen mit den Signalwerten des Kraftaufnehmers am linken Kalibrierpunkt 40 und am rechten Kalibrierpunkt 36 der Anlage der Kugel am ersten Anschlag 36, ergibt sich dann ein linearer Zusammenhang von Kräften und Weg, so daß über eine Kraftmessung immer eindeutig und sehr genau der zurückgelegte Weg der Kugel meßbar ist unabhängig davon, ob sich durch Verschleiß an der Kugel oder dem Meßkanal oder durch Ermüdung der Federn eine andere Steilheit der Beziehung Federkraft F zu Verschiebeweg S ergeben sollte.

Bei einem zweiten Ausführungsbeispiel des Mengensensors gemäß Figur 6 ist als Trennkörper ein Kolben 47 vorgesehen, der wiederum von der ersten Druckfeder 36 gemäß dem Ausführungsbeispiel nach Figur 2 beaufschlagt wird. Die Druckfeder 36 stützt sich andererseits wieder an dem Kraftaufnehmer 33 ab, der in dem dem Einsatz 29 von Figur 2 entsprechenden Einsatz 29 angeordnet ist. In diesen Bereichen entspricht die Ausführung des Mengensensors 123 gemäß Figur 3 dem des Mengensensors 23 von Figur 1. Abweichend hiervon fehlt jedoch hier die zweite Druckfeder. Der Kolben 47 läuft bei Entspannung des Kraftstoffvolumens zwischen Mengensensor 123 und Kraftstoffeinspritzventil immer bis zu einem festen Anschlag 49 zurück, der den Meßkanal 128 axial pumpenarbeitsraumseitig begrenzt. Zwischen dem Außenumfang des Kolbens 47 und dem Innendurchmesser des Meßkanals 128 ist wiederum ein definierter Leckspalt 50 vorgesehen, über den bei Anlage des Kolbens 47 am zweiten Anschlag 49 ein Druckausgleich zum Pumpenarbeitsraum hin erfolgen kann. In der Funktionsweise ist dieser Mengensensor gleich wie der von Figur 2. Mit Beginn der Kraftstofförderung für die Voreinspritzung wird der Kolben 47 im Meßkanal 128 zum Kraftstoffeinspritzventil hin verschoben, erreicht dort eine Maximalauslenkung, wird bei Unterbrechung der Hochdruckförderung und bei der folgenden Entspannung auf der Seite des Pumpenarbeitsraumes wieder um einen bestimmten Betrag zurückbefördert analog der Darstellung in Figur 4, Punkt 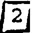 . Diese Position wird wiederum durch den Kraftaufnehmer 33 zu diesem Kurbelwellenpunkt KW° gemessen und an die Steuereinrichtung und zu deren Auswerteeinrichtung weitergegeben. Bei der darauffolgenden Haupteinspritzung wird der Kolben in den Überströmbereich innerhalb der Bohrung 31 bis zur Anlage an den ersten Anschlag 34 verschoben, wo er die Verbindung zwischen dem Meßkanal 128 und dem Einspritzventil über die Nuten 32 freigibt. Nach erfolgter Haupteinspritzung und der daraufhin erfolgenden Entspannung des Volumens in der Einspritzleitung wird der Kolben 47 wieder zurückbewegt bis zur Anlage an den zweiten Anschlag 49.

Diese Lösung hat den Vorteil, daß der Kolben mit Sicherheit immer an den zweiten Anschlag 49 gelangt, der wiederum als erster Kalibrierpunkt dient. Die Entspannung des Druckes der Einspritzleitung durch diesen Rücklauf des Kolbens 47 ist regelmäßig so groß, daß der Restdruck in der Einspritzleitung zwischen Mengensensor 123 und Kraftstoffeinspritzventil soweit abgesenkt ist, daß eine Nacheinspritzung vermieden wird. Druckwellen, die durch Schließen des Kraftstoffeinspritzventils auftreten, werden durch den rücklaufenden Kolben 47 ebenfalls gedämpft und tragen somit nicht zu Druckerhöhungen bei, die zu Nachspritzern führen könnten. In dem Zeitraum zwischen dem Zeitpunkt der Anlage an den zweiten Anschlag 49 bis zur nächsten Voreinspritzung verstreicht im übrigen soviel Zeit, daß ein Druckausgleich zwischen dem durch den Trennkolben 47 geteilten Bereichen der Kraftstoffeinspritzleitung erfolgen kann. In diesem Ausführungsbeispiel ist der linke Kalibrierpunkt am zweiten Anschlag 49 zugleich auch die Ausgangslage des Kolbens 47, die mit der ausgelenkten Lage nach Voreinspritzung verglichen wird.

Eine Verbesserung der Meßgenauigkeit des Mengensensors ist dann gegeben, wenn der Restdruck in der Kraftstoffeinspritzleitung zwischen Voreinspritzung und Haupteinspritzung konstant auf einen höheren Wert gehalten wird. Damit ergeben sich die Vorteile, daß Druckschwingungen im Bereich zwischen Vor- und Haupteinspritzung kleiner werden, da das System nicht zu stark angeregt werden kann. Die Druckabsenkung in diesem Bereich wird so eingestellt, daß die Voreinspritzung mit Sicherheit unterbrochen wird. Eventuelle Nachspritzer aufgrund von Druckwellen sind in diesem Bereich weniger schädlich, da in jedem Fall noch eine Haupteinspritzung erfolgt und der dabei eingebrachte Kraftstoff mit Sicherheit verbrennt. Weiterhin wird durch die Erhöhung des Restdruckes im Bereich zwischen Vor- und Haupteinspritzung erreicht, daß ein geringeres Totvolumen aufgefüllt werden muß, um wiederum zur Einspritzdruckhöhe zu gelangen. Dies hat letztendlich Vorteile bezüglich der Energiebilanz der Kraftstoffeinspritzpumpe. Wird der Wert des Restdruckes zwischen Vor- und Haupteinspritzung exakt geregelt, so kann dieser Druck im Verhältniss zu dem Ausgangsdruck bei Ausgangslage des Trennkolbens vor der Kugel 44 oder dem Kolben 47 als fester Korrekturwert berücksichtigt werden.

Ein höherer Restdruck läßt sich vorteilhaft mit einem Gleichdruckventil einstellen, dessen Haltedruck steuerbar ist. Ein solches Ventil zeigt Figur 8. Es liegt dabei parallel zu einem in Förderrichtung öffnenden Rückschlagventil, das den zum Kraftstoffeinspritzventil zu fördernden Kraftstoff ungehindert passieren läßt und nach Entlastung des Pumpenarbeitsraumes schließt. Nach diesem Schließen des Rückschlagventils 51 tritt dann ein Druckhalteventil 52 gemäß Figur 8 in Aktion, das den Restdruck in der Einspritzleitung steuert. Dieses weist ein Ventilschließglied 54 auf, das eine kegelige Dichtfläche 55 an seiner Stirnseite hat, mit der es durch eine Druckfeder 56 in Anlage an einen Ventilsitz 57 bringbar ist. Dieser ist am Übergang eines das Ventilschließglied 54 aufnehmenden und dieses führenden kreiszylindrischen Raumes 53 zu der zum Mengensensor 23 bzw. 123 führenden Kraftstoffeinspritzleitung 22 angeordnet. Die Druckfeder 56 stützt sich anderen Endes an einem Bund 58 an einem hülsenförmigen Stützteil 59 ab, dessen axiale Durchgangsbohrung 60 einen dem Einspritzleitungsquerschnitt entsprechenden Durchtrittsquerschnitt hat. Das Stützteil ist zugleich Anker eines Tauchankermagneten und kann unter Einwirkung der Magnetspule 61 dieses Magneten 62 axial in dem Raum 53 verstelle werden. Der Magnet mit seinem Kern umgibt dabei das den Raum 53 aufnehmende Gehäuse 64. Durch die Verschiebung des Stützteils wird die Druckfeder 56 mehr oder weniger vorgespannt, so daß sich der Öffnungsdruck, der das Ventilglied 54 öffnet, entsprechend verändert. Entsprechend wird dann in der Einspritzleitung 22 ein dieser Vorspannung der Druckfeder 56 entsprechender Restdruck eingehalten. Der Maximalweg des Stützteils in Richtung geringem Restdruck wird durch einen Anschlag 65 begrenzt, an dem der Bund 58 zur Anlage kommt. Der Anschlag wird vorzugsweise durch ein nichtmagnetisches, in das Gehäuse 64 eingepreßtes oder geschraubtes hülsenförmiges Teil gebildet.

Zur Einstellung des Restdruckes zwischen Vor- und Haupteinspritzung wird jeweils durch Erregung der Magnetspule 61 die dafür notwendige Verschiebung des Stützteils bewirkt. Die Magnetspule wird dabei entsprechend von der Steuereinrichtung 25 in diesen Betriebsabschnitten angesteuert. Dabei können unterschiedliche Parameter, die sich aus unterschiedlichen Betriebszuständen der Brennkraftmaschine ergeben, berücksichtigt werden. Die Ansteuerung erfolgt nockenwellenwinkelabhängig.

In der Ausführung wird für jedes Einspritzventil ein Mengensensor und ein gesteuertes Gleichdruckventil vorgesehen. Auf diese Weise kann das gesteuerte Gleichdruckventil individuell auf den jeweiligen Zylinder der Brennkraftmaschine und der Randbedingungen der Einspritzung in diesen Zylindern angepaßt werden und insbesondere der erforderliche Restdruck zwischen Vor- und Haupteinspritzung eingestellt werden. Die Voreinspritzmenge ist zylinderindividuell ebenfalls einstellbar. Nach erfolgter Haupteinspritzung wird die Vorspannung am Druckhalteventil 52 so eingestellt, daß der Standdruck auf einen Wert abgesenkt wird, bei dem mit Sicherheit Nachspritzer, die sich jetzt nachteilig auswirken, vermieden werden.

Die beschriebenen Mengensensoren können vorteilhaft auch ein Spritzbeginnmeßsignal abgeben, das umso genauer ist, je näher der Mengensensor am Einspritzventil angeordnet ist. Vorteilhaft kann auch der Mengensensor in jedem Einspritzventil integriert sein. Dabei ergibt sich eine geringste Fehlerquote durch die Zeit oder Kurbelwellenwinkeldifferenz zwischen erster Auslenkung des Trennkörpers und dem tatsächlichen Einspritzbeginn, da das zwischen Meßsensor und Einspritzventilöffnung eingespannte Volumen sehr klein ist. Durch Differenzierung der Kräfte beim Beginn der Auslenkung des Trennkörpers ergibt sich somit ein Wert für den Einspritzbeginn.

## Patentansprüche

1. Vorrichtung zum Messen von Kraftstoffeinspritzmengen, die von einer Kraftstoffhochdruckquelle (9) über eine Kraftstoffeinspritzleitung (21) einem Kraftstoffeinspritzventil (22) zugeführt werden mit einem in einem kreiszylindrischen Meßkanal (28, 128) der Kraftstoffeinspritzleitung (22) gegen die Kraft einer Feder (36) in Förderrichtung bis zu einem Anschlag (34) verschiebbaren und durch die Kraft der Feder (36) am Ende der Hochdruckförderung zum Kraftstoffeinspritzventil wieder rückführbaren Trennkörper (44, 47) und mit einer elektrischen Einrichtung zum Messen der Position des Trennkörpers innerhalb des Meßkanals (28), dadurch gekennzeichnet, daß die Kraftstoffhochdruckquelle durch eine intermittierend fördernde Kraftstoffpumpe gebildet ist, deren Hochdruckförderphase jeweils durch Entlastung der Hochdruckseite gesteuert wird und daß der Trennkörper (44, 47) durch die Feder (36) in seine Ausgangsstellung bringbar ist und in dieser Stellung den einspritzpumpenseitigen Teil der Einspritzleitung (21) von dem einspritzventilseitigen Teil der Einspritzleitung trennt und ab einem bestimmten Verschiebeweg im Meßkanal (28) der einer bestimmten Fördermenge entspricht in einen Überströmbereich verschoben wird, in dem der Trennkörper (36, 47) eine den Trennkörper umgebenden Überströmquerschnitt (32) zwischen Meßkanal (28) und weiterführender Einspritzleitung (22) aufgesteuert hat.

2. Vorrichtung nach Anspruch 1, dadurch gekennzeichnet, daß der Verschiebeweg im Meßkanal (28) ein Verdrängungsvolumen umfaßt, das größer ist als eine größte auftretende Kraftstoffmenge, die von der Kraftstoffeinspritzpumpe zum Kraftstoffeinspritzventil (22) zum Zwecke der Durchführung einer Voreinspritzung gefördert wird und kleiner ist als die Summe dieser Kraftstoffmenge und der kleinsten zur Durchführung einer Kraftstoffhaupteinspritzung geförderten Kraftstoffmenge.

3. Vorrichtung nach Anspruch 2, dadurch gekennzeichnet, daß der Verschiebeweg innerhalb des Überströmbereiches, der aus einem sich an den Meßkanal (28) anschließenden Teilkanal der Einspritzleitung gebildet wird, durch einen Anschlag (34) begrenzt ist.

4. Vorrichtung nach Anspruch 3, dadurch gekennzeichnet, daß die an den Trennkörper (44) angreifende Feder eine erste Druckfeder (36) ist und dieser gegenüber eine zweite Druckfeder (42) am Trennkörper (44) angreift und der Trennkörper entgegen der zweiten Druckfeder aus dem Meßkanal (28) in einen zweiten Überströmbereich (37) verschiebbar ist, in welchen zweiten Überströmbereich der Trennkörper einen Überströmquerschnitt (38) aufgesteuert hat, wobei die Verschiebung des Trennkörpers im zweiten Überströmbereich durch einen zweiten Anschlag (40) begrenzt ist (Figur 2).

5. Vorrichtung nach Anspruch 3, dadurch gekennzeichnet, daß die Ausgangsstellung des Trennkörpers (47) durch einen zweiten Anschlag (49) bestimmt ist, an den er durch die Feder (36) nach Beendigung der Haupteinspritzung bringbar ist (Figur 6).

6. Vorrichtung nach einem der Ansprüche 1 bis 5, dadurch gekennzeichnet, daß der Überströmquerschnitt in dem Überströmbereich durch wenigstens eine Längsnut (32, 38) in der die Einspritzleitung begrenzenden Innenwand gebildet wird.

7. Vorrichtung nach Anspruch 6, dadurch gekennzeichnet, daß mehrere im gleichen Winkelabstand und mit gleichem Querschnitt versehene Längsnuten (32, 38) vorgesehen sind.

8. Vorrichtung nach Anspruch 7, dadurch gekennzeichnet, daß der die Längsnuten (32, 38) aufweisende Teil (31, 37) der Einspritzleitung (22) in einem zugleich den als axial vorstehenden Teil gebildeten Anschlag (34, 40) aufnehmenden Einsatz (33, 39) gebildet werden, der stirnseitig und koaxial in einen den Meßkanal (28) aufnehmenden Zwischenstück in der Einspritzleitung eingesetzt ist.

9. Vorrichtung nach Anspruch 8, dadurch gekennzeichnet, daß das Zwischenstück, (27) in der Kraftstoffeinspritzpumpe eingesetzt ist und mit der weiterführenden Einspritzleitung (21) verbunden ist.

10. Vorrichtung nach Anspruch 4 oder 5, dadurch gekennzeichnet, daß der erste und der zweite Anschlag als Kalibrieranschläge für die elektrische Einrichtung zum Messen der Position des Trennkörpers dienen.

11. Vorrichtung nach Anspruch 10, dadurch gekennzeichnet, daß die elektrische Einrichtung zum Messen der Position des Trennkörpers einen Kraftaufnehmer (33) umfaßt, an dem das eine Ende der Druckfeder (36) zur Anlage kommt und über die aus der Verspannung der Druckfeder resultierende Kraft den Weg des Trennkörpers erfaßt.

12. Vorrichtung nach Anspruch 11, dadurch gekennzeichnet, daß einmal die Position des Trennkörpers (44, 47) am ersten Anschlag (34) und zum anderen die Position des Trennkörpers (44, 47) bei Anlage an dem zweiten Anschlag (40, 49) als Kalibrierpunkte für die sich einstellende Federspannung der Druckfeder (36) dienen, welche Kalibrierpunkte von der elektrischen Meßeinrichtung erfaßt werden zur Einstellung einer linearen Kennlinie des Federspannungsverlaufes zwischen diesen beiden Kalibrierpunkten und zur entsprechenden Erfassung des zurückgelegten Weges des Trennkörpers aus der Federspannung.

13. Vorrichtung nach einem der vorstehenden Ansprüche, dadurch gekennzeichnet, daß in der Einspritzleitung zwischen der Vorrichtung zum Messen der Kraftstoffeinspritzmenge (23, 123) und der Kraftstoffeinspritzpumpe ein in Förderrichtung zum Kraftstoffeinspritzventil (22) öffnendes Ventil (51) und parallel dazu ein in Richtung Kraftstoffeinspritzpumpe öffnendes Druckhalteventil (52) angeordnet sind und das Druckhalteventil (52) ein Schließglied (54) aufweist, das von einer elektrich steuerbaren Schließkraft beaufschlagt ist.

14. Vorrichtung nach Anspruch 13, dadurch gekennzeichnet, daß die Schließkraft durch eine Feder (46) erzeugt wird, die sich an einem elektrisch gesteuerten lageveränderlichen Stützteil (59) stützt.

15. Vorrichtung nach Anspruch 14, dadurch gekennzeichnet, daß das Stützteil (59) durch einen Anker, insbesondere einem Tauchanker eines Elektromagneten (62) gebildet wird.

16. Vorrichtung nach Anspruch 15, dadurch gekennzeichnet, daß der Anker eine kraftstoffdurchströmte Hülse ist, die durch Magnetkraft von einem festen Anschlag (65) gegen die Kraft der Feder (56) verschiebbar ist.

17. Vorrichtung nach Anspruch 4 oder 5, dadurch gekennzeichnet, daß sich die Feder (36) an dem dem Trennkörper (44, 45) abgewandten Ende auf einen Kraftaufnehmer (33) abstützt, der ortsfest angeordnet ist und dessen Ausgangssignal von der elektrischen Einrichtung (25) erfaßt wird und in Relation zu den bei Anlage des Trennkörpers an dem Anschlag (34) auftretenden Meßwert als Verschiebeweg des Trennkörpers ermittelt wird.

18. Vorrichtung nach einem der vorstehenden Ansprüche, dadurch gekennzeichnet, daß die Position des Trennkörpers berührungslos gemessen wird.

19. Vorrichtung nach Anspruch 18, dadurch gekennzeichnet, daß die Position des Trennkörpers induktiv oder optisch gemessen wird.
